# EUROPÄISCHE PATENTANMELDUNG

(11) **EP 1 298 403 A2**
(43) Veröffentlichungstag der Anmeldung: **02.04.2003**
(21) Anmeldenummer: 02018692.0
(22) Anmeldetag: 21.08.2002
(51) Int. Cl.: F28F 9/00, F28F 9/007, F01N 3/02

(54) **Vorrichtung zum Befestigen eines Abgas-Wärmeübertragers**

(30) Priorität: 26.09.2001 DE 10147555
(71) Anmelder: Behr GmbH & Co., 70469 Stuttgart (DE)
(72) Erfinder: Müller, Daniel, Dipl.-Ing., 70563 Stuttgart (DE); Reschke, Andreas, 71706 Markgröningen (DE); Rosin, Jürgen, Dipl.-Ing., 70186 Stuttgart (DE)
(74) Vertreter: Grauel, Andreas, Dr.

(57) **Zusammenfassung**

Die vorliegende Erfindung betrifft eine Befestigungsvorrichtung (1) zum Befestigen eines Abgas-Wärmeübertragers (3) an einem Bauteil, mit einer den Abgas-Wärmeübertrager (3) zwischen seinen Enden (4, 5) geschlossen umfassenden Halterung (2), die wenigstens eine Haltelasche (6, 7) aufweist, mit der die Halterung (2) am Bauteil befestigbar ist.

## Beschreibung

Die vorliegenden Erfindung betrifft eine Befestigungsvorrichtung zum Befestigen eines Abgas-Wärmeübertragers an einem Bauteil.

Aus der DE 198 36 889 A1 ist es bekannt, an einem Abgas-Wärmeübertrager zwei Halterungen, die jeweils aus einem abgewinkelten Stahlblech bestehen, anzulöten. Ebenso ist es möglich, derartige Halterungen am Abgas-Wärmeübertrager anzuschweißen. Mit Hilfe dieser Halterungen kann der Abgas-Wärmeübertrager an einem dafür vorgesehenen Bauteil, z.B. an einer Fahrzeugkarosserie, befestigt werden, z.B. mittels einer Schraubverbindung. Es hat sich jedoch gezeigt, daß die Lötverbindungen bzw. die Schweißverbindungen unter den Einsatzbedingungen des Abgas-Wärmeübertragers eine Rißbildung im Körper des Abgas-Wärmeübertragers begünstigen, wodurch die so gebildete Befestigung in der Regel keine ausreichende Dauerbelastbarkeit aufweist.

Die vorliegende Erfindung beschäftigt sich mit dem Problem, für die Befestigung eines Abgas-Wärmeübertragers eine Möglichkeit aufzuzeigen, die eine erhöhte Dauerbelastbarkeit besitzt.

Dieses Problem wird erfindungsgemäß durch eine Befestigungsvorrichtung mit den Merkmalen des Anspruchs 1 gelöst.

Die Erfindung beruht auf dem allgemeinen Gedanken, eine Halterung, mit der der Abgas-Wärmeübertrager am dafür vorgesehenen Bauteil befestigt werden kann, so auszugestalten, daß diese den Abgas-Wärmeübertrager zwischen seinen Enden formschlüssig umgreift. Durch diese Bauweise können Schweißverbindungen oder Lötverbindungen zur Festlegung der Halterung am Abgas-Wärmeübertrager entfallen. Materialschwächungen und Kerbwirkungen, die bei der Herstellung von Lötverbindungen oder Schweißverbindungen auftreten können, werden durch diese Bauweise vermieden, so daß die Dauerhaltbarkeit bei der erfindungsgemäß vorgeschlagenen Befestigungsvorrichtung relativ hoch ist.

Bei einer entsprechenden Ausgestaltung der Halterung bzw. des den Abgas-Wärmeübertrager umfassenden Abschnitts der Halterung kann außerdem erreicht werden, daß die Halterung zumindest bei ihrer Montage in Längsrichtung des Abgas-Wärmeübertragers relativ zu diesem verstellbar oder justierbar ist, wodurch bei der Befestigung des Abgas-Wärmeübertragers Lagetoleranzen ausgeglichen werden können. Auch hierdurch kann eine Vereinfachung der Montage erreicht werden. Gleichzeitig wird die Ausbildung von Spannungen durch den Ausgleich der Lagetoleranzen reduziert, was sich vorteilhaft auf die Dauerbelastbarkeit der vorgeschlagenen Befestigungsvorrichtung auswirkt.

Von besonderer Bedeutung ist eine Ausführungsform, bei der die Halterung so ausgebildet ist, daß sie den Abgas-Wärmeübertrager mit einem selbsthaltenden Klemmsitz umgreift. Bei dieser Ausgestaltung können im fertig montierten Zustand Relativbewegungen zwischen Halterung und Abgas-Wärmeübertrager unterdrückt werden, um auf diese Weise den Abgas-Wärmeübertrager sicher und zuverlässig am jeweiligen Bauteil zu positionieren.

Entsprechend einer vorteilhaften Ausführungsform kann die Halterung aus zwei Halteteilen bestehen, die jeweils einen einen Umfangsabschnitt des Abgas-Wärmeübertragers umgreifenden Aufnahmeabschnitt und wenigstens eine Haltelasche aufweisen, wobei die Ausnahmeabschnitte der beiden Halteteile bei zusammengebauter Halterung den Abgas-Wärmeübertrager geschlossen umfassen, wobei die Haltelaschen der beiden Halteteile bei zusammengebauter Halterung aufeinander liegen, derart, daß sie gemeinsam am Bauteil befestigbar sind. Durch diese Bauweise kann der Befestigungsvorgang, mit dem der Abgas-Wärmeübertrager am jeweiligen Bauteil befestigt werden soll, erheblich vereinfacht werden, da die Halterung vor Ort, also unmittelbar am Abgas-Wärmeübertrager komplettiert werden kann. Hierdurch ist es auch möglich, den Abgas-Wärmeübertrager zunächst ohne die erfindungsgemäße Befestigungsvorrichtung in den Abgasstrang einzubinden, so daß die gegebenenfalls sperrige Befestigungsvorrichtung den Montagevorgang nicht stört, sondern durch ihre Abwesenheit erleichtert. Anschließend kann die erfindungsgemäß zweiteilige Halterung nachträglich angebracht werden. Da die den einzelnen Halteteilen zugeordneten Haltelaschen gemeinsam am Bauteil befestigbar sind, vereinfacht sich auch hier die Montage der Befestigungsvorrichtung.

Gemäß einer Weiterbildung kann jedes Halteteil eine Verbindungslasche aufweisen, die bei zusammengebauter Halterung miteinander verbunden sind. Durch diese Merkmale kann die Halterung besser an die jeweilige Einbausituation angepaßt werden. Zu diesem Zweck können die Verbindungslaschen beispielsweise so geformt sein, daß beim Zusammenbau der Halterung zwei an den Verbindungslaschen ausgebildete komplementäre Teile formschlüssig ineinandergreifen. Ebenso ist es möglich, die beiden Halteteile im Bereich ihrer Verbindungslaschen miteinander zu verschrauben, zu vernieten, zu verschweißen oder zu verlöten.

Gemäß einer vorteilhaften Weiterbildung kann wenigstens eines der Halteteile im Aufnahmeabschnitt zum Abgas-Wärmeübertrager vorstehende Rippen und/oder Noppen aufweisen. Diese Rippen bzw. Noppen kommen bei entsprechend dimensionierter Halterung am Abgas-Wärmeübertrager zur Anlage und können punktförmige bzw. linienförmige Haltekräfte auf den Abgas-Wärmeübertrager aufbringen, wodurch eine sichere und zuverlässige Positionierung des Abgas-Wärmeübertragers relativ zum jeweiligen Bauteil unterstützt wird.

Die Montage der erfindungsgemäßen Befestigungsvorrichtung kann dadurch erleichtert werden, daß die Haltelaschen an einer Seite der Halterung als U-förmige Gabeln ausgebildet sind, die alle in derselben Richtung offen sind. Hierdurch ist es möglich, die seitlich offenen Haltelaschen gleichzeitig auf bereits vormontierte Schrauben aufzustecken. Ebenso ermöglichen die so geformten Haltelaschen einen Ausgleich von Lagetoleranzen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- **Fig. 1**: eine Draufsicht auf einen Abgas-Wärmeübertrager mit daran angebrachter erfindungsgemäßer Befestigungsvorrichtung,
- **Fig. 2**: eine Seitenansicht entsprechend einem Pfeil II in Fig. 1 auf den mit der erfindungsgemäßen Befestigungsvorrichtung ausgestatteten Abgas-Wärmeübertrager,
- **Fig. 3**: einen Querschnitt durch die erfindungsgemäße Befestigungsvorrichtung entsprechend den Schnittlinien III in Fig. 1,
- **Fig. 4**: eine Draufsicht auf ein erstes Halteteil der erfindungsgemäßen Befestigungsvorrichtung,
- **Fig. 5**: eine Seitenansicht auf das erste Halteteil,
- **Fig. 6**: eine Schnittansicht des ersten Halteteils entsprechend den Schnittlinien VI in Fig. 4,
- **Fig. 7**: eine Draufsicht auf ein zweites Halteteil der erfindungsgemäßen Befestigungsvorrichtung,
- **Fig. 8**: eine Seitenansicht auf das zweite Halteteil und
- **Fig. 9**: eine Schnittansicht des zweiten Halteteils entsprechend den Schnittlinien IX in Fig. 7.

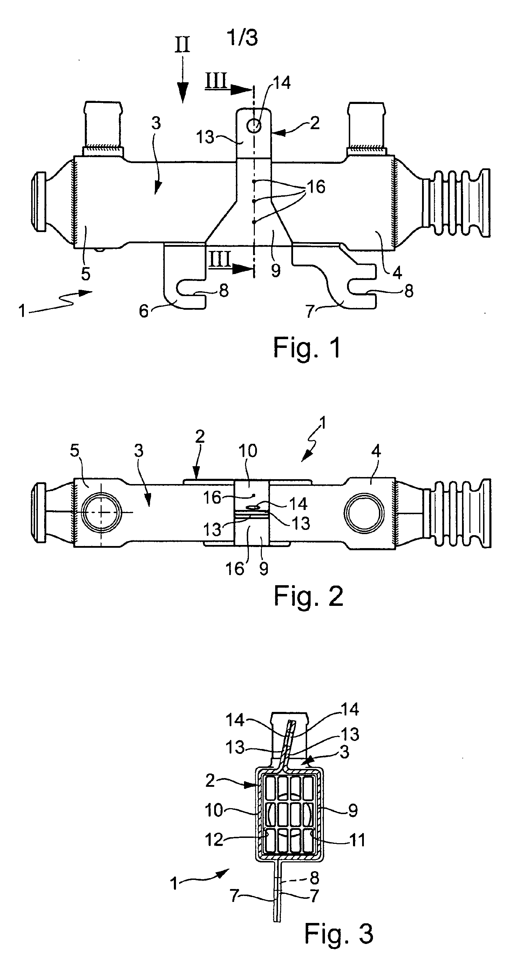

Entsprechend den Fig. 1 bis 3 weist eine erfindungsgemäße Befestigungsvorrichtung 1 eine Halterung 2 auf, die einen Abgas-Wärmeübertrager 3 zwischen seinen Enden 4 und 5 vollständig umgreift. Die Halterung 2 weist an einer Seite des Abgas-Wärmeübertragers 3 zwei Haltelaschen 6 und 7 auf, mit denen die Halterung 2 an einem nicht gezeigten geeigneten Bauteil befestigt werden kann. Beispielsweise wird die Halterung 2 über ihre Haltelaschen 6 und 7 an eine Fahrzeugkarosserie angeschraubt. Die Haltelaschen 6 und 7 sind hier mit U-förmigen Gabeln 8 ausgestattet, wobei die Gabeln 8 der beiden Haltelaschen 6 und 7 in derselben Richtung offen sind. Auf diese Weise kann die Halterung 2 auf bereits vormontierte oder gesteckte Schrauben seitlich aufgesteckt werden, wodurch der Montageprozess erheblich rationeller durchführbar ist.

Entsprechend der hier gezeigten Ausführungsform ist die Halterung 2 aus zwei Halteteilen, nämlich aus einem ersten Halteteil 9 und aus einem zweiten Halteteil 10, aufgebaut. Diese beiden Halteteile 9 und 10 sind quasi komplementär zueinander geformt, so daß beide jeweils einen Umfangsabschnitt des Abgas-Wärmeübertragers 3 umgreifen, derart, daß die beiden Halteteile 9, 10 bei zusammengebauter Halterung 2 den Abgas-Wärmeübertrager 3 geschlossen umfassen, vgl. insbesondere Fig. 3. Die Halteteile 9 und 10 sind zu diesem Zweck jeweils mit einem Aufnahmeabschnitt 11 bzw. 12 ausgestattet, dessen Innenkontur jeweils an die Außenkontur des zugeordneten Umfangsabschnitts des Abgas-Wärmeübertragers 3 angepaßt ist. Jedes Halteteil 9, 10 weist hier zwei Haltelaschen 6, 7 auf, die dabei so geformt und angeordnet sind, daß sie bei zusammengebauter Halterung 2 im wesentlichen deckungsgleich aufeinander liegen, so daß die aufeinanderliegenden Haltelaschen 6 bzw. 7 gemeinsam, also wie eine einzige Haltelasche 6, 7, am jeweiligen Bauteil befestigbar sind. Bei dieser Bauweise vereinfacht sich die Montage.

An einer von den Haltelaschen 6, 7 abgewandten Seite des Abgas-Wärmeübertragers 3 können beide Halteteile 9, 10 jeweils mit einer Verbindungslasche 13 ausgestattet sein, bei der die Halteteile 9, 10 bei zusammengebauter Halterung 2 miteinander verbunden sind. Beispielsweise sind beide Verbindungslaschen mit einer Durchgangsöffnung 14 ausgestattet, durch die eine Verbindungsschraube gesteckt und mit einer Mutter verschraubt werden kann. Sofern es die Einbausituation zuläßt, können auch die hier als Verbindungslaschen 13 bezeichneten Laschen als Haltelaschen dienen, um auch an dieser Stelle die Halterung 2 mit dem jeweiligen Bauteil zu verbinden. Bei dieser Ausführungsform sind dann an zwei gegenüberliegenden Seiten des Abgas-Wärmeübertragers 3 Laschen 6, 7 und 13 vorgesehen, mit denen die Halterung 2 bzw. die Halteteile 9, 10 am jeweiligen Bauteil befestigbar sind.

Um die Halterung 2 an die jeweilige Einbausituation anzupassen, kann es beispielsweise erforderlich sein, die Verbindungslaschen 13 gegenüber den Haltelaschen 6, 7 abzuwinkeln, was beispielsweise aus den Schnittansichten hervorgeht.

Aus den Fig. 1 und 2 geht hervor, daß es beim Zusammenbau der Halterung 2 grundsätzlich möglich ist, diese vor einer endgültigen Fixierung in der Längsrichtung des Abgas-Wärmeübertragers 3 zu justieren, um auf diese Weise z.B. die Laschen 6, 7 und gegebenenfalls 13 relativ zu Gewindestiften oder Gewindeöffnungen an oder in demjenigen Bauteil auszurichten, an dem die Halterung 2 befestigt werden soll.

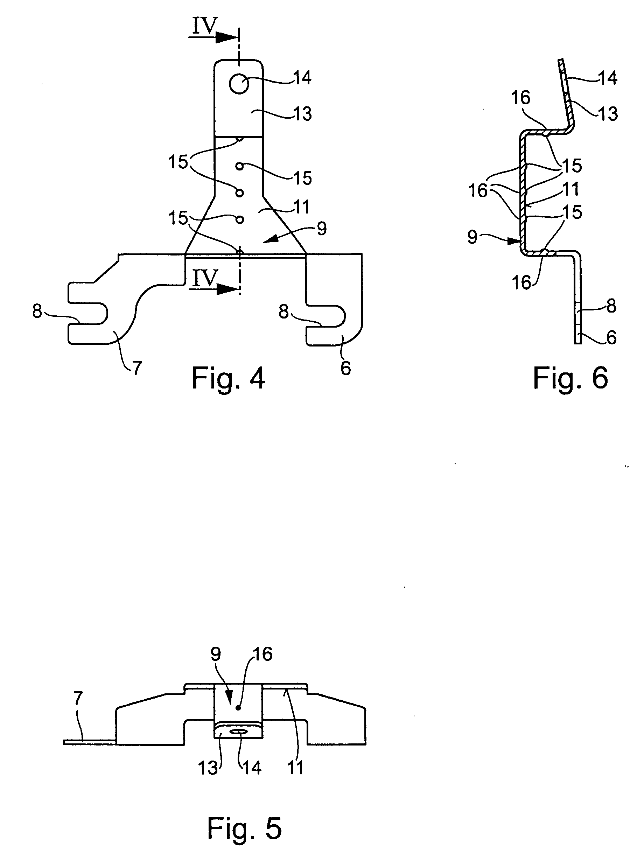

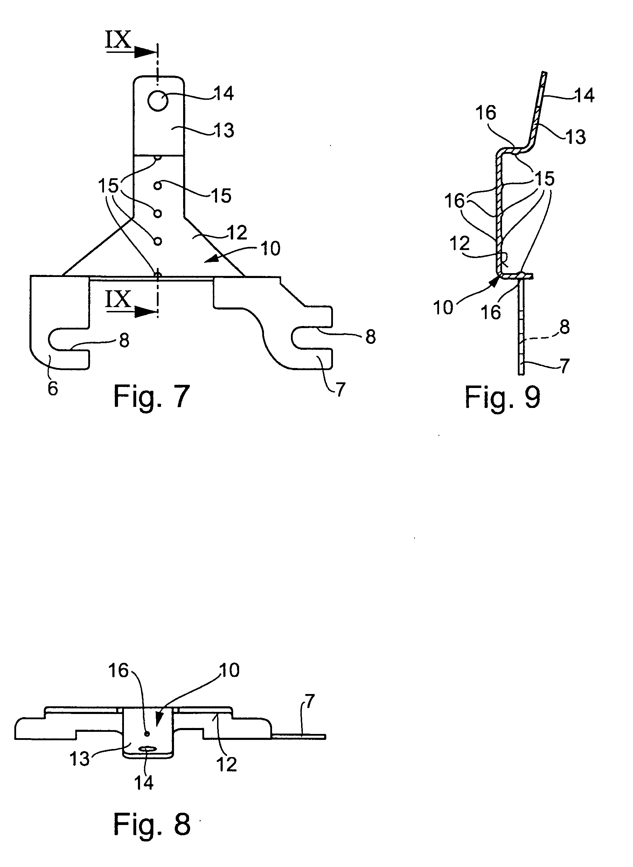

Entsprechend einer bevorzugten Ausführungsform ist die Halterung 2 so ausgebildet, daß sie den Abgas-Wärmeübertrager 3 im zusammengebauten Zustand mit einem selbsthaltenden Klemmsitz umgreift. Die Relativlage zwischen Halterung 2 und Abgas-Wärmeübertrager 3 ist dann fixiert. Um die gewünschte Klemmwirkung zu verbessern oder zu erzeugen, sind in den Aufnahmeabschnitten 11 und 12 der Halteteile 9 und 10 Noppen 15 ausgebildet, die in Richtung Abgas-Wärmeübertrager 3 vom Halteteil 9, 10 abstehen. Diese Noppen 15 sind in den Fig. 4 und 6 sowie 7 und 9 besonders deutlich erkennbar. Diese Noppen 15 bilden bei einer entsprechenden Dimensionierung der Aufnahmeabschnitte 11, 12 und bei zusammengebauter Halterung 2 punktförmige Krafteinleitungsstellen, die eine effektive Klemmwirkung und somit eine wirkungsvolle Fixierung der Halterung 2 am Abgas-Wärmeübertrager 3 gewährleisten. Die Noppen 15 können beispielsweise dadurch hergestellt werden, daß an korrespondierenden Stellen auf der vom Abgas-Wärmeübertrager 3 abgewandten Außenseite des jeweiligen Halteteils 9, 10 entsprechende Vertiefungen 16 eingebracht, insbesondere eingeschlagen, werden. Zusätzlich oder alternativ zu solchen Noppen 15 können auch vorstehende Rippen vorgesehen sein, um die Klemmwirkung zu verbessern bzw. herzustellen.

Die Halteteile 9 und 10 können besonders preiswert und einfach durch Umformen, Abkanten, Stanzen aus Blechteilen hergestellt werden. Dementsprechend ist die erfindungsgemäße Befestigungsvorrichtung 1 besonders preiswert herstellbar.

Da die Halterung 2 im montierten Zustand den Abgas-Wärmeübertrager 3 formschlüssig umschließt, ist dieser zumindest verliersicher am jeweiligen Bauteil befestigt. Sofern außerdem zwischen Halterung 2 und Abgas-Wärmeübertrager 3 ein selbsthaltender Klemmsitz realisiert wird, kann auch mit hoher Zuverlässigkeit eine vorbestimmte Relativlage zwischen Abgas-Wärmeübertrager 3 und dem jeweiligen Bauteil gewährleistet werden. Von besonderer Bedeutung ist hierbei, daß die erfindungsgemäße Befestigungsvorrichtung 1 ohne eine Schweißverbindung oder Lötverbindung zwischen der Halterung 2 und dem Abgas-Wärmeübertrager 3 auskommt. Materialschwächungen am Abgas-Wärmeübertrager 3, die sich durch derartige Schweiß- oder Lötverbindungen ausbilden können, werden dadurch vermieden, so daß die Lebensdauer des Abgas-Wärmeübertragers 3 bzw. der Anbindung des Abgas-Wärmeübertragers 3 an das jeweilige Bauteil erhöht ist.

### Bezugszeichenliste

- 1: Befestigungsvorrichtung
- 2: Halterung
- 3: Abgas-Wärmeübertrager
- 4: Ende von 3
- 5: Ende von 3
- 6: Haltelasche
- 7: Haltelasche
- 8: Gabel
- 9: erstes Halteteil
- 10: zweites Halteteil
- 11: Aufnahmeabschnitt von 9
- 12: Aufnahmeabschnitt von 10
- 13: Verbindungslasche
- 14: Durchgangsöffnung in 13
- 15: Noppe
- 16: Vertiefung

## Patentansprüche

1. Befestigungsvorrichtung zum Befestigen eines Abgas-Wärmeübertragers (3) an einem Bauteil, mit einer den Abgas-Wärmeübertrager (3) zwischen seinen Enden (4, 5) geschlossen umfassenden Halterung (2), die wenigstens eine Haltelasche (6, 7, 13) aufweist, mit der die Halterung (2) am Bauteil befestigbar ist.

2. Befestigungsvorrichtung nach Anspruch 1,
**dadurch gekennzeichnet,**
**daß** die Halterung (2) so ausgebildet ist, daß sie den Abgas-Wärmeübertrager (3) mit einem selbsthaltenden Klemmsitz umgreift.

3. Befestigungsvorrichtung nach Anspruch 1 oder 2,
**dadurch gekennzeichnet,**
**daß** die Halterung (2) aus zwei Halteteilen (9, 10) besteht, die jeweils einen einen Umfangsabschnitt des Abgas-Wärmeübertragers (3) umgreifenden Aufnahmeabschnitt (11, 12) und wenigstens eine Haltelasche (6, 7, 13) aufweisen, wobei die Aufnahmeabschnitte (11, 12) der beiden Halteteile (9, 10) bei zusammengebauter Halterung (2) den Abgas-Wärmeübertrager (3) geschlossen umfassen und wobei die Haltelaschen (6, 7, 13) der beiden Halteteile (9, 10) bei zusammengebauter Halterung (2) aufeinander liegen, derart, daß sie gemeinsam am Bauteil befestigbar sind.

4. Befestigungsvorrichtung nach Anspruch 3,
**dadurch gekennzeichnet,**
**daß** jedes Halteteil (9,10) eine Verbindungslasche (13) aufweist, die bei zusammengebauter Halterung (2) miteinander verbunden sind.

5. Befestigungsvorrichtung nach Anspruch 3 oder 4,
**dadurch gekennzeichnet,**
**daß** wenigstens eines der Halteteile (9, 10) im Aufnahmeabschnitt (11, 12) zum Abgas-Wärmeübertrager (3) vorstehende Rippen und/oder Noppen (15) aufweist.

6. Befestigungsvorrichtung nach einem der Ansprüche 1 bis 5,
**dadurch gekennzeichnet,**
**daß** an einer Seite der Halterung (2) die Haltelaschen (6, 7) mit U-förmigen Gabeln ausgestattet sind, die in derselben Richtung offen sind.
